# EUROPEAN PATENT SPECIFICATION

(11) **EP 4 530 109 B1**
(45) Date of publication and mention of the grant of the patent: **22.04.2026**
(21) Application number: 23199703.2
(22) Date of filing: 26.09.2023
(51) Int. Cl.: B60K 15/03, B29C 49/20, F02M 37/00

(54) **PLASTIC FUEL TANK WITH SUPPORTING ELEMENT**
KUNSTSTOFFKRAFTSTOFFTANK MIT STÜTZELEMENT
RÉSERVOIR DE CARBURANT EN PLASTIQUE AVEC ÉLÉMENT DE SUPPORT

(43) Date of publication of application: 02.04.2025
(73) Proprietor: TI Automotive Technology Center GmbH, 76437 Rastatt (DE)
(72) Inventor: HAOUALA, Moez, 76185 Karlsruhe (DE); CERINI, Richard, Rochester Hills, MI 48309 (US); BLEIER-BOST, Peter, 76676 Graben-Neudorf (DE); SCHWAGER, Dennis, 76187 Karlsruhe (DE)
(74) Representative: dompatent

(56) References cited:
- EP-A1- 4 098 423
- CN-U- 208 544 112
- JP-A- 2007 237 776
- US-A1- 2019 105 982

## Description

The present invention relates to a plastic fuel tank for a vehicle, as well as a motorized vehicle comprising said fuel tank, and a method for manufacturing the fuel tank.

Fuel tanks are generally known from the prior art in various types. Typically, a fuel tank is made of a plastic material or a metal. In particular, when a fuel tank is made of a plastic material, the mechanical stiffness of the tank may be rather low due to the material properties and the relatively low thickness of the tank body. In order to provide a higher stiffness of plastic fuel tanks, supporting elements (also referred to stiffening elements or reinforcing elements) may be provided that allow to absorb a mechanical force applied on the fuel tank. These supporting elements may have a longitudinal form and may be made of a plastic material.

According to common plastic fuel tanks, the supporting elements are frequently made of a thermoplastic material, wherein the supporting elements are welded to a bottom part and a top part of the fuel tank. Typically, the supporting elements are made of the same material as the fuel tank, thus providing the same melting temperature, whereby the welding process is simplified.

While the mentioned fuel tanks including supporting elements being connected to the fuel tank body via welded joints comprise several benefits, these type of fuel tanks are also linked with some drawbacks. For instance, the manufacturing process is usually challenging and time-consuming, since the connection of the supporting elements to the tank body is sensitive to any movements of the supporting elements during the welding process.

EP 4 098 423 A1 discloses a plastic tank with a supporting structure which is anchored to the tank body.

In view of the above, it is one object of the present invention to provide a plastic fuel tank that allows to be manufactured in an easy and efficient manner.

Another object of the present invention is to provide a plastic fuel tank which can be produced with low manufacturing costs. A further object of the present invention is to provide a plastic fuel tank having an increased mechanical stiffness.

In order to solve the above-mentioned objects, a plastic fuel tank for a vehicle is provided with the present invention, wherein the plastic fuel tank comprises the following:
- a bottom part and a top part;
- at least one side wall extending between the bottom part and the top part, wherein the bottom part, the top part and the at least one side wall define an inner space of the plastic fuel tank, the inner space being configured to receive fuel;
- at least one supporting element, wherein the at least one supporting element
   - has an elongated shape and comprises a longitudinal axis;
   - comprises a first end side and a second end side at its axial ends;
   - comprises a flange at the first end side or the second end side, wherein the flange comprises a flange width;
   - is arranged between the bottom part and the top part;
- wherein the top part or the bottom part comprises an integrated receiving structure for receiving the flange of the supporting element, wherein the receiving structure
   - is formed by the top part or the bottom part;
   - forms a stepped cavity comprising a first cavity and a second cavity;
      wherein
      - the first cavity is defined by an outer part of the top part or the bottom part forming a first cavity outer wall and at least one first cavity side wall extending from the first cavity outer wall; wherein the first cavity is arranged adjacent to the second cavity;
      - the second cavity is defined by at least a second cavity side wall, and the second cavity is arranged between the first cavity and the inner space of the plastic fuel tank;
      - the first cavity comprises a first cavity width, and the second cavity comprise a second cavity width, wherein the first cavity width is larger than the second cavity width; and
- wherein the flange width is larger than the second cavity width and smaller or equal to the first cavity width.

The plastic fuel tank according to the present invention allows a stable attachment of the supporting element with the plastic fuel tank. Furthermore, according to the present invention, it is not mandatory to weld the outer surfaces of the supporting element with the top part and the bottom part of the fuel tank, which simplifies the manufacturing process. In this way, the manufacturing costs are reduced and the manufacturing velocity is increased.

The at least one side wall may be designed as a ring-shaped wall surrounding the inner space of the fuel tank. According to some embodiments, the fuel tank can also comprise several side walls, e.g. four side walls arranged rectangularly to each other forming the inner space of the fuel tank. It is also possible that the fuel tank comprises more than four side walls abutting each other and forming the inner space of the fuel tank. The present invention can be implemented regardless of the number of the side walls.

The supporting element is configured to support the fuel tank in case of an overpressure and/or an underpressure, thus preventing or at least reducing the likelihood of a destruction or a fracture of the fuel tank. The supporting element further reduces the likelihood of possible cracks in the top part and the bottom part of the fuel tank. Hence, the supporting element contributes to an increased stiffness and, as a consequence, to an increased lifespan of the fuel tank. According to the present invention, several supporting elements may be provided, depending on the size and the specific design of the fuel tank, wherein the present invention may be implemented regardless of the specific number of the supporting elements.

The flange of the supporting element may be designed as an integrated part of the supporting element or, alternatively, as a separate part being connected to a body of the supporting element. In the latter case, the flange may be welded or mechanically connected to the body of the supporting element. According to the present invention, a flange is provided at the first end side and/or at the second end side of the supporting element, and comprises a larger width when compared to the adjacent part of the supporting element. According to some embodiments, one flange may be provided being received in a receiving structure in the top part or the bottom part. In preferred embodiments of the present invention, a supporting element comprises one flange at each of its end sides, wherein one flange is received in a first receiving structure formed in the top part and one flange is received in a second receiving structure in the bottom part of the fuel tank.

According to some embodiments of the present invention, the supporting element and the flange may have a rotationally symmetric form, wherein the flange may preferably comprise a disk-shape. In the latter case, the first cavity and the second cavity may have a cylindrical shape, wherein the diameter of the first cavity is larger than the diameter of the second cavity. According to some embodiments, the stepped cavity may comprise a second cavity having uniformly reduced width when compared to the first cavity. For instance, the first cavity and the second cavity may each comprise a cylindrical shape, wherein the diameter of the second cavity is 10 %, 20 %, 30 % or 50 % reduced when compared to the first cavity. According to some embodiments, the second cavity may not comprise a rotationally cylindrical shape, wherein the width of the second cavity is reduced when compared to the first cavity at least along one cross-section of the stepped cavity. By providing the receiving structure comprising a stepped cavity with a first cavity and a second cavity (having a smaller width when compared to the first cavity), the flange can be locked inside the receiving structure and fixed therein in a mechanically stable manner.

The outer part of the top part or the bottom part describes a part of a top part or the bottom part which has a larger distance to the inner space of the tank when compared to the first cavity side wall and the second cavity side wall. In particular, the outer part may refer to a part of the top part or the bottom part comprising the largest distance to the inner space of the fuel tank.

Preferably, the sidewall, the bottom part and the top part are integrally designed. In addition, the first cavity side wall, the second cavity side wall and the outer part of the top part of the bottom part and may be integrally designed. Hence, the design of the fuel tank can be simplified and, as a consequence, the manufacturing costs can be further reduced.

According to preferred embodiments of the present invention, the flange comprises an outer surface being directed away from the axial center of the supporting element, wherein the outer surface of the flange is welded to the outer part of the top part or the bottom part. Hence, a more stable fixation of the supporting element within the receiving structure can be provided. In addition, according to this embodiment, the receiving structure can significantly assist the welding process by positioning the flange into the desired position and by keeping the flange in the desired position during the welding process. Hence, the alignment of the supporting element during the welding process is significantly improved.

According to some embodiments of the present invention, the height of the first cavity is smaller than the height of the flange. Hence, the flange is clamped inside the first cavity in an axial direction, whereby the mechanical stability of the fixation is significantly improved. The clamping force induced by the receiving structure is increased. It is noted that the top part is usually formed by a rather thin plastic structure. Hence, the receiving structure typically comprises some flexibility, such that the flange can be received in the first cavity if the height of the flange is larger than the height of the first cavity. In addition, when the flange is further welded to the top part or the bottom part of the fuel tank, providing a first cavity with a height being smaller than the height of the flange, the resulting clamping force leads to an improved welding process, since and axial clamping force is applied to the flange by the receiving structure, pressing the flange and the top part of the bottom part of the fuel tank together during the welding process. This leads to an improved welding process and a more stable attachment between the supporting element and the top part and/or the bottom part of the fuel tank.

According to some embodiments of the present invention, the width of the first cavity may be larger than the width of the flange. According to some preferred embodiments of the present invention, the width of the first cavity may be equal to the width of the flange. As a consequence of the width of the first cavity being equal to the width of the flange, the flange is clamped inside the first cavity of the receiving structure in a radial direction. This enables a stable fixing of the flange in the radial direction within the first cavity of the receiving structure. In addition, if the outer surface of the flange is welded to the outer part of the top part or the bottom part, the fixation of the supporting element in a radial direction enables a simplified welding process, since the flange of the supporting element is kept in a radially stable position during the welding process.

According to some further preferred embodiments of the present invention, the first cavity comprises a tapered form, wherein the width of the first cavity decreases in a direction from the first cavity outer wall to the second cavity. Hence, the flange is centered within the first cavity in a radial direction when received in the first cavity.

In addition, the flange may also comprise a tapered shape, wherein the width of the flange decreases in a direction from its outer surface to the axial center of the supporting element. The tapering angle can be chosen in accordance with the tapering angle of the first cavity. In other words, the tapering angles can be chosen identically or at least similarly. Hence, the radial centering of the flange inside the first cavity can be improved.

According to some preferred embodiments of the present invention, the supporting element comprises a rotationally symmetrical shape. In addition, the first cavity, the second cavity and the flange may comprise a rotationally symmetrical shape.

Preferably, the supporting element comprises a tapered shape, wherein the width of the supporting element decreases from its axial ends to its axial center. Hence, the supporting element may intentionally break at a predetermined point, in case an increased force acts on the fuel tank, e.g. during an accident.

According to some preferred embodiments of the present invention, the supporting element comprises at least one breaking point configured to break when an axial force exceeding a predetermined force threshold is applied to the supporting element. The breaking point may be ensured by providing a notch at a specific position of the supporting element. The depth of the notch can be adjusted depending on the chosen force threshold.

According to further preferred embodiments of the present invention, the side wall, the bottom part and the top part of the fuel tank are integrally formed. Hence, the structure of the fuel tank is simplified and the manufacturing costs can be reduced.

According to further embodiments of the present invention, the side wall, the bottom part and the top part are made at least partly of a thermoplastic material. In addition, the supporting element and the receiving structure may be made of a thermoplastic material.

According to some preferred embodiments of the present invention, the side wall, the bottom part and the top part are made at least partly of one of the following materials: polyethylene (PE), high-density polyethylene (HDPE), polypropylene (PP), polyethylene terephthalate (PET), polystyrene (PS), polymethyl methacrylate (PMMA), polyoxymethylene (POM), polyphenylensulfis (PPS), polyphathalamid (PPA), polyether ether ketone (PEEK), polyamide-imides (PAI), or polyaryletherketone (PAEK). According to further embodiments of the present invention, the supporting element and/or the receiving structure can be made at least partly of one of the mentioned materials.

According to some embodiments of the present invention, the fuel tank is designed as a single tank or as a saddle tank.

According to the present invention, a motorized vehicle is suggested, wherein the motorized vehicle comprises a fuel tank according to one of the above-described embodiments.

With the present invention, a method for manufacturing a fuel tank according to one of the above-described embodiments is suggested, wherein the method uses a blow molding process, and the method comprises the following steps:
- providing a parison made of a plastic material inside an inner cavity of a mold, wherein the parison defines an inner cavity, and wherein the mold comprises two halves and is designed to form the desired shape of the fuel tank, and wherein the mold comprises a first opening and a second opening, the first opening being arranged at a first side of the mold and the second opening being arranged at a second side of the mold, the second side being opposed to the first side, the first opening being configured to insert the parison into the mold and the second opening being configured to insert a supporting element into an inner space of the parison;
- inserting a supporting element in the inner cavity of the parison;
- blowing compressed air into the parison, thereby expanding the parison;
- approaching the two halves of the mold to each other, thus forming the expanded parison in accordance with the shape of the mold;
- cooling the inner cavity of the mold, thereby solidifying the formed fuel tank.

The method according to the present invention allows an efficient and costreduced process for manufacturing plastic fuel tanks. According to the method suggested with the present invention, it is not mandatory to weld the outer surfaces of a supporting element to parts of the fuel tank. However, according to some embodiments of the present method, an outer surface of the flange may be welded to the top part or the bottom part of the fuel tank in order to increase the strengths of the attachment between the supporting element and the top part/bottom part of the fuel tank.

In the following, the present invention will be further described in the context of the attached figures, wherein the figures show the following:
- Fig. 1: a fuel tank according to the prior art,
- Fig. 2: an embodiment of a fuel tank according to the present invention,
- Fig. 3: an enlarged view of the embodiment of the present invention as illustrated in Fig. 2, and
- Fig. 4: an enlarged view of a further embodiment of the present invention.

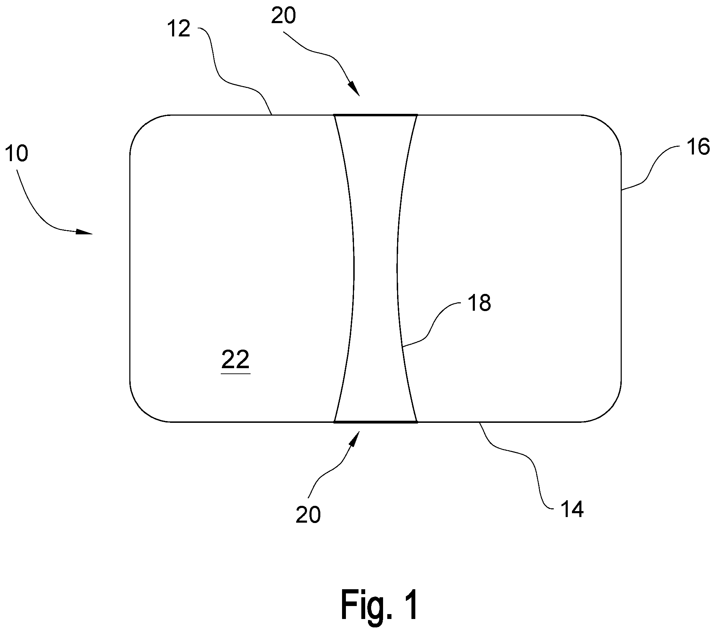

In Fig. 1, a common fuel tank 10 as known from the prior art is schematically illustrated. The fuel tank 10 comprises a top part 12, a bottom part 14 and a sidewall 16. The side wall 16 may be designed as a ring-shaped wall surrounding an inner space 22 of the fuel tank 10. Inside the inner space 22, a supporting element 18 is provided. The supporting element 18 is arranged between the top part 12 and the bottom part 14 of the fuel tank 10. The supporting element 18 comprises outer surfaces 20, which are typically welded with the top part 12 and the bottom part 14 during the process of manufacturing the fuel tank 10.

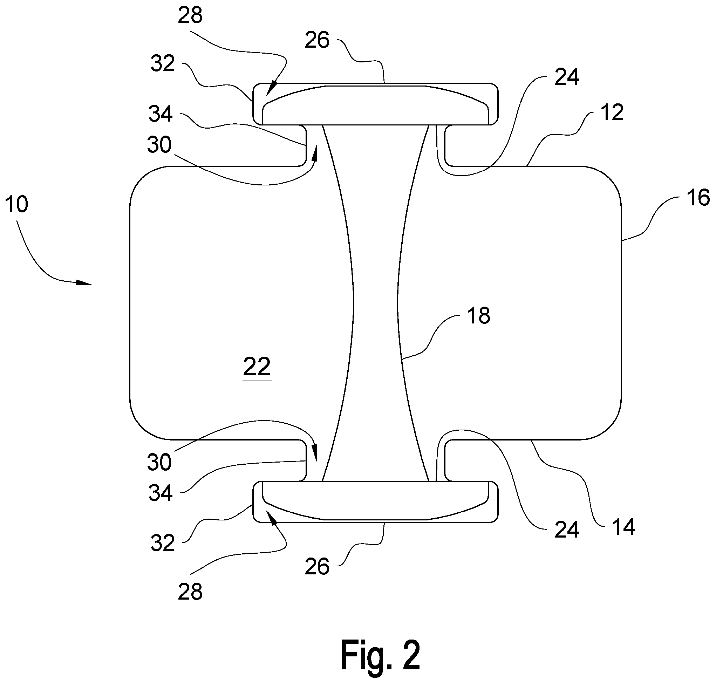

In Fig. 2, an embodiment of a fuel tank 10 according to the present invention is schematically illustrated. Similar to the fuel tank illustrated in Fig. 1, the fuel tank 10 shown in Fig. 2 also comprises a top part 12, a bottom part 14 and a side wall 16, which define an inner space 22 of the fuel tank 10. The fuel tank 10 further comprises a supporting element 18 comprising flanges 24 at its outer ends. Furthermore, the fuel tank 10 comprises integrated receiving structures within the top part 12 and bottom part 14. Each of the receiving structures comprises a first cavity 28 and a second cavity 30, wherein the width of the first cavity 28 is larger than the width of the second cavity 30 and wherein the width of the flange 24 is larger than the width of the second cavity 30 and smaller than the width of the first cavity 28. Thus, the receiving structure is configured to receive the flange 24 within the first cavity 28. Hence, the supporting element 18 can be stably attached to the fuel tank 10 in a simplified and effective manner.

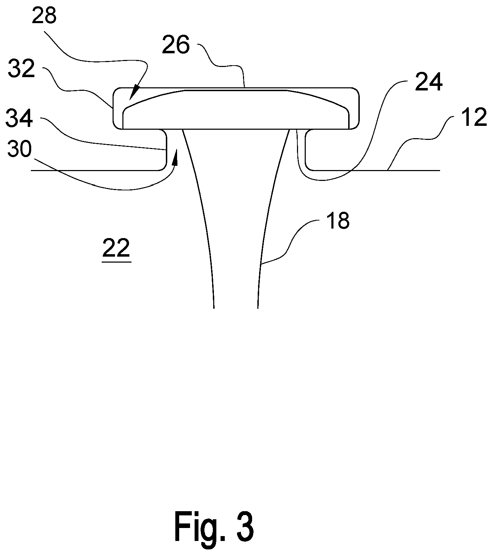

In Fig. 3, an enlarged view of the embodiment illustrated in Fig. 2 is shown. As can be seen from Fig. 3, the receiving structure comprises the first cavity 28 and the second cavity 30, wherein the width of the second cavity 30 is smaller than the width of the first cavity 28. Hence, the receiving structure formed within the top part 12 of the fuel tank 10 is configured to receive the flange 24 of the supporting element 18. As further illustrated in Fig. 3, the first cavity 28 is formed by an outer part 26 of the top part 12, which forms a first cavity outer wall, and by a first cavity side wall 32. The first cavity side wall 32 extends from the outer part 26 and defines the height of the first cavity 28. The second cavity 30 is defined by a second cavity side wall 34, which defines the height and the widths of the second cavity 30. As can further be seen in Fig. 3, the width of the flange 24 is larger than the width of the second cavity 30 and slightly smaller than the width of the first cavity 28. Hence, the flange 24 of the supporting element 18 is stably fixed within the receiving structure.

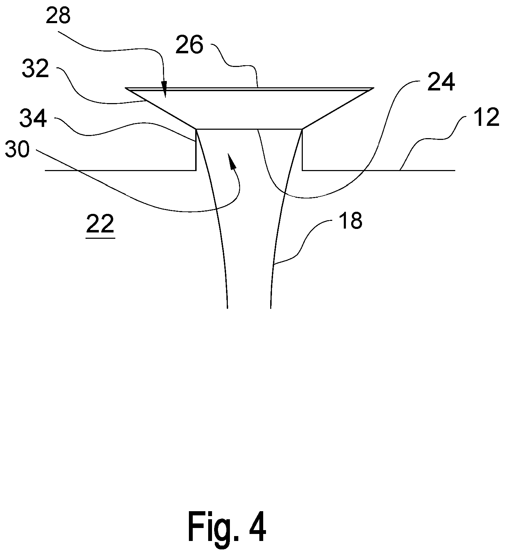

In Fig. 4, an enlarged view of a further embodiment of the present invention is illustrated. As can be seen in Fig. 4, the first cavity comprises a tapered structure, wherein the diameter of the cavity decreases in a direction from the outer part 26 of the top part 12 of the fuel tank 10 to the second cavity 30. At the same time, the flange 24 comprises a tapered structure, wherein the diameter of the flange decreases from the outer surface of the flange 24 facing the outer part 26 to the axial center of the supporting element 18. As further illustrated in Fig. 4, the tapering angle of the first cavity 28 and the tapering angle of the flange 24 are chosen identical. Hence, the flange 24 is radially centered within the first cavity 28.

### REFERENCE NUMBERS

- 10: fuel tank
- 12: top part
- 14: bottom part
- 16: side wall
- 18: supporting element
- 20: outer surface of the supporting element
- 22: inner space
- 24: flange
- 26: outer part of the top part / bottom part
- 28: first cavity
- 30: second cavity
- 32: first cavity side wall
- 34: second cavity side wall

### REFERENCE NUMBERS

- 10: fuel tank
- 12: top part
- 14: bottom part
- 16: side wall
- 18: supporting element
- 20: outer surface of the supporting element
- 22: inner space
- 24: flange
- 26: outer part of the top part / bottom part
- 28: first cavity
- 30: second cavity
- 32: first cavity side wall
- 34: second cavity side wall

## Claims

1. Plastic fuel tank (10) for a vehicle, the plastic fuel tank (10) comprising:
- a bottom part (14) and a top part (12);
- at least one side wall (16) extending between the bottom part (14) and the top part (12), wherein the bottom part (14), the top part (12) and the at least one side wall (16) define an inner space (22) of the plastic fuel tank (10), the inner space (22) being configured to receive fuel;
- at least one supporting element (18), wherein the at least one supporting element (18)
- has an elongated shape and comprises a longitudinal axis;
- comprises a first end side and a second end side at its axial ends;
- comprises a flange (24) at the first end side or the second end side, wherein the flange (24) comprises a flange width; and
- is arranged between the top part (12) and the bottom part (14);
- wherein the top part (12) or the bottom part (14) comprises an integrated receiving structure for receiving the flange (24) of the supporting element (18); wherein the receiving structure
- is formed by the top part (12) or the bottom part (14); and
- forms a stepped cavity comprising a first cavity (28) and a second cavity (30); wherein
- the first cavity (28) is defined by an outer part (26) of the top part or the bottom part forming a first cavity outer wall, and at least one first cavity side wall (32) extending from the first cavity outer wall; wherein the first cavity (28) is arranged adjacent to the second cavity (30);
- the second cavity (30) is defined by at least a second cavity side wall (34), and the second cavity (30) is arranged between the first cavity (28) and the inner space (22) of the plastic fuel tank; and
- the first cavity (28) comprises a first cavity width, and the second cavity (30) comprise a second cavity width, wherein the first cavity width is larger than the second cavity width; and
- wherein the flange width is larger than the second cavity width and smaller or equal to the first cavity width,
**characterized in that** the height of the first cavity (28) is smaller than the height of the flange (24).

2. Fuel tank (10) according to claim 1, **characterized in that** the flange (24) comprises an outer surface being directed away from the axial center of the supporting element (18), wherein the outer surface of the flange (24) is welded to the outer part (26) of the top part or the bottom part.

3. Fuel tank (10) according to any of claims 1 to 2, **characterized in that** the width of the first cavity (28) is equal to the widths of the flange (24).

4. Fuel tank (10) according to any of claims 1 to 3, **characterized in that** the first cavity (28) comprises a tapered form, wherein the width of the first cavity (28) decreases in a direction from the first cavity outer wall to the second cavity (30).

5. Fuel tank (10) according to any of claims 1 to 4, **characterized in that** the supporting element (18) comprises a rotationally symmetrical shape.

6. Fuel tank (10) according to any of claims 1 to 5, **characterized in that** the supporting element (18) comprises a tapered shape, wherein the width of the supporting element (18) decreases from its axial ends to its axial center.

7. Fuel tank (10) according to any of claims 1 to 6, **characterized in that** the supporting element (18) comprises at least one breaking point configured to break when and axial force exceeding a predetermined force threshold is applied to the supporting element (18).

8. Fuel tank (10) according to any of claims 1 to 7, **characterized in that** the side wall (16), the bottom part (14) and the top part (12) of the fuel tank are integrally formed.

9. Fuel tank (10) according to any of claims 1 to 8, **characterized in that** the side wall (16), the bottom part (14) and the top part (12) are made at least partly of a thermoplastic material.

10. Fuel tank (10) according to any of claims 1 to 9, **characterized in that** the side wall (16), the bottom part (14) and at the top part (12) are made at least partly of any of the following materials: polyethylene, PE, high-density polyethylene, HDPE, polypropylene, PP, polyethylene terephthalate, PET, polystyrene, PS, polymethyl methacrylate, PMMA, polyoxymethylene, POM, polyphenylensulfis, PPS, polyphathalamid, PPA, polyether ether ketone, PEEK, polyamide-imides, PAI, or polyaryletherketone, PAEK.

11. Fuel tank (10) according to any of claims 1 to 10, **characterized in that** the fuel tank (10) is designed as a single tank or as a saddle tank.

12. Motorized vehicle comprising a fuel tank (10) according to any of claims 1 to 11.

13. Method for manufacturing a fuel tank (10) according to any of claims 1 to 11 by using a blow molding process, wherein the method comprises the following steps:
- providing a parison made of a plastic material inside an inner cavity of a mold, wherein the parison defines an inner cavity, the mold comprises two halves and is designed to form the desired shape of the fuel tank, the mold comprises a first opening and a second opening, the first opening being arranged at a first side of the mold and the second opening being arranged at a second side of the mold, the second side being opposed to the first side, the first opening being provided to insert the parison into the mold, and the second opening being provided to insert a supporting element into an inner space of the parison;
- providing a supporting element in the inner cavity of the parison;
- blowing compressed air into the parison, thereby expanding the parison
- approaching the two halves of the mold to each other, thus forming the expanded parison in accordance with the shape of the mold;
- cooling the inner cavity of the mold, thereby solidifying the formed fuel tank,
**characterized in that** the height of the first cavity (28) is smaller than the height of the flange (24).

## Patentansprüche

1. Kunststoffkraftstofftank (10) für ein Fahrzeug, wobei der Kunststoffkraftstofftank (10) aufweist:
- ein Unterteil (14) und ein Oberteil (12);
- mindestens eine Seitenwand (16), die sich zwischen dem Unterteil (14) und dem Oberteil (12) erstreckt, wobei das Unterteil (14), das Oberteil (12) und die mindestens eine Seitenwand (16) einen Innenraum (22) des Kunststoffkraftstofftanks (10) definieren, wobei der Innenraum (22) zur Aufnahme von Kraftstoff ausgebildet ist;
- mindestens ein Stützelement (18), wobei das mindestens eine Stützelement (18)
- eine längliche Form hat und eine Längsachse aufweist;
- eine erste Endseite und eine zweite Endseite an seinen axialen Enden aufweist;
- einen Flansch (24) an der ersten Endseite oder der zweiten Endseite aufweist, wobei der Flansch (24) eine Flanschbreite aufweist; und
- zwischen dem Oberteil (12) und dem Unterteil (14) angeordnet ist;
- wobei das Oberteil (12) oder das Unterteil (14) eine integrierte Aufnahmestruktur zur Aufnahme des Flansches (24) des Stützelements (18) aufweist; wobei die Aufnahmestruktur
- durch das Oberteil (12) oder das Unterteil (14) gebildet wird; und
- einen gestuften Hohlraum bildet, der einen ersten Hohlraum (28) und einen zweiten Hohlraum (30) aufweist; wobei
- der erste Hohlraum (28) durch einen äußeren Teil (26) des Oberteils oder des Unterteils, der eine erste Hohlraumaußenwand bildet, und mindestens eine erste Hohlraumseitenwand (32), die sich von der ersten Hohlraumaußenwand aus erstreckt, definiert ist; wobei der erste Hohlraum (28) angrenzend an den zweiten Hohlraum (30) angeordnet ist;
- der zweite Hohlraum (30) durch mindestens eine zweite Hohlraumseitenwand (34) definiert ist und der zweite Hohlraum (30) zwischen dem ersten Hohlraum (28) und dem Innenraum (22) des Kunststoffkraftstofftanks angeordnet ist; und
- der erste Hohlraum (28) eine erste Hohlraumbreite aufweist und der zweite Hohlraum (30) eine zweite Hohlraumbreite aufweist, wobei die erste Hohlraumbreite größer ist als die zweite Hohlraumbreite; und
- wobei die Flanschbreite größer als die zweite Hohlraumbreite und kleiner oder gleich der ersten Hohlraumbreite ist,
**dadurch gekennzeichnet, dass** die Höhe des ersten Hohlraums (28) kleiner ist als die Höhe des Flansches (24).

2. Kraftstofftank (10) nach Anspruch 1, **dadurch gekennzeichnet, dass** der Flansch (24) eine Außenfläche aufweist, die von der axialen Mitte des Stützelements (18) weggerichtet ist, wobei die Außenfläche des Flansches (24) mit dem äußeren Teil (26) des Oberteils oder des Unterteils verschweißt ist.

3. Kraftstofftank (10) nach einem der Ansprüche 1 bis 2, **dadurch gekennzeichnet, dass** die Breite des ersten Hohlraums (28) gleich der Breite des Flansches (24) ist.

4. Kraftstofftank (10) nach einem der Ansprüche 1 bis 3, **dadurch gekennzeichnet, dass** der erste Hohlraum (28) eine verjüngte Form aufweist, wobei die Breite des ersten Hohlraums (28) in einer Richtung von der Außenwand des ersten Hohlraums zum zweiten Hohlraum (30) abnimmt.

5. Kraftstofftank (10) nach einem der Ansprüche 1 bis 4, **dadurch gekennzeichnet, dass** das Stützelement (18) eine rotationssymmetrische Form aufweist.

6. Kraftstofftank (10) nach einem der Ansprüche 1 bis 5, **dadurch gekennzeichnet, dass** das Stützelement (18) eine verjüngte Form aufweist, wobei die Breite des Stützelements (18) von seinen axialen Enden zu seiner axialen Mitte hin abnimmt.

7. Kraftstofftank (10) nach einem der Ansprüche 1 bis 6, **dadurch gekennzeichnet, dass** das Stützelement (18) mindestens eine Sollbruchstelle aufweist, die so ausgebildet ist, dass sie bricht, wenn eine axiale Kraft, die einen vorbestimmten Kraftschwellenwert überschreitet, auf das Stützelement (18) ausgeübt wird.

8. Kraftstofftank (10) nach einem der Ansprüche 1 bis 7, **dadurch gekennzeichnet, dass** die Seitenwand (16), das Unterteil (14) und das Oberteil (12) des Kraftstofftanks einstückig ausgebildet sind.

9. Kraftstofftank (10) nach einem der Ansprüche 1 bis 8, **dadurch gekennzeichnet, dass** die Seitenwand (16), das Unterteil (14) und das Oberteil (12) zumindest teilweise aus einem thermoplastischen Material bestehen.

10. Kraftstofftank (10) nach einem der Ansprüche 1 bis 9, **dadurch gekennzeichnet, dass** die Seitenwand (16), das Unterteil (14) und das Oberteil (12) zumindest teilweise aus einem der folgenden Materialien bestehen: Polyethylen, PE, Polyethylen hoher Dichte, HDPE, Polypropylen, PP, Polyethylenterephthalat, PET, Polystyrol, PS, Polymethylmethacrylat, PMMA, Polyoxymethylen, POM, Polyphenylensulfid, PPS, Polyphathalamid, PPA, Polyetheretherketon, PEEK, Polyamidimide, PAI, oder Polyaryletherketon, PAEK.

11. Kraftstofftank (10) nach einem der Ansprüche 1 bis 10, **dadurch gekennzeichnet, dass** der Kraftstofftank (10) als Einzeltank oder als Satteltank ausgebildet ist.

12. Motorisiertes Fahrzeug, das einen Kraftstofftank (10) nach einem der Ansprüche 1 bis 11 aufweist.

13. Verfahren zur Herstellung eines Kraftstofftanks (10) nach einem der Ansprüche 1 bis 11 durch Anwendung eines Blasformverfahrens, wobei das Verfahren die folgenden Schritte umfasst:
- Bereitstellen eines Vorformlings aus einem Kunststoffmaterial innerhalb eines inneren Hohlraums eines Formwerkzeugs, wobei der Vorformling einen inneren Hohlraum definiert, das Formwerkzeug zwei Hälften aufweist und so ausgebildet ist, dass es die gewünschte Form des Kraftstofftanks bildet, das Formwerkzeug eine erste Öffnung und eine zweite Öffnung aufweist, die erste Öffnung an einer ersten Seite des Formwerkzeugs angeordnet ist und die zweite Öffnung an einer zweiten Seite des Formwerkzeugs angeordnet ist, wobei die zweite Seite der ersten Seite entgegengesetzte ist, die erste Öffnung vorgesehen ist, um den Vorformling in das Formwerkzeug einzuführen, und die zweite Öffnung vorgesehen ist, um ein Stützelement in einen Innenraum des Vorformlings einzuführen;
- Bereitstellen eines Stützelements im inneren Hohlraum des Vorformlings;
- Einblasen von Druckluft in den Vorformling, wodurch der Vorformling expandiert wird;
- Annähern der beiden Formwerkzeughälften aneinander, wodurch der aufgeweitete Vorformling entsprechend der Form des Formwerkzeugs entsteht;
- Kühlen des inneren Hohlraums des Formwerkzeugs, wodurch der geformte Kraftstofftank verfestigt wird,
**dadurch gekennzeichnet, dass** die Höhe des ersten Hohlraums (28) kleiner ist als die Höhe des Flansches (24).

## Revendications

1. Réservoir de carburant en plastique (10) destiné à un véhicule, le réservoir de carburant en plastique (10) comprenant :
- une partie inférieure (14) et une partie supérieure (12) ;
- au moins une paroi latérale (16) s'étendant entre la partie inférieure (14) et la partie supérieure (12), dans lequel la partie inférieure (14), la partie supérieure (12) et l'au moins une paroi latérale (16) délimitent un espace intérieur (22) du réservoir de carburant en plastique (10), l'espace intérieur (22) étant configuré pour recevoir du carburant ;
- au moins un élément de support (18), dans lequel l'au moins un élément de support (18)
- a une forme allongée et comprend un axe longitudinal ;
- comprend un côté première extrémité et un côté seconde extrémité au niveau de ses extrémités axiales ;
- comprend une bride (24) au niveau du côté première extrémité ou du côté seconde extrémité, dans lequel la bride (24) a une largeur de bride ; et
- est disposé entre la partie supérieure (12) et la partie inférieure (14) ;
- dans lequel la partie supérieure (12) ou la partie inférieure (14) comprend une structure de réception intégrée destinée à recevoir la bride (24) de l'élément de support (18) ; dans lequel la structure de réception
- est formée par la partie supérieure (12) ou par la partie inférieure (14) ; et
- forme une cavité étagée comprenant une première cavité (28) et une seconde cavité (30) ; dans lequel
- la première cavité (28) est délimitée par une partie extérieure (26) de la partie supérieure ou de la partie inférieure formant une paroi extérieure de première cavité, et au moins une paroi latérale de première cavité (32) s'étendant à partir de la paroi extérieure de première cavité ; dans lequel la première cavité (28) est disposée adjacente à la seconde cavité (30) ;
- la seconde cavité (30) est délimitée par au moins une paroi latérale de seconde cavité (34), et la seconde cavité (30) est disposée entre la première cavité (28) et l'espace intérieur (22) du réservoir de carburant en plastique ; et
- la première cavité (28) a une largeur de première cavité, et la seconde cavité (30) a une largeur de seconde cavité, dans lequel la largeur de première cavité est supérieure à la largeur de seconde cavité ; et
- dans lequel la largeur de bride est supérieure à la largeur de seconde cavité et est inférieure ou égale à la largeur de première cavité,
**caractérisé en ce que** la hauteur de la première cavité (28) est inférieure à la hauteur de la bride (24).

2. Réservoir de carburant (10) selon la revendication 1, **caractérisé en ce que** la bride (24) comprend une surface extérieure qui est orientée à l'opposé du centre axial de l'élément de support (18), dans lequel la surface extérieure de la bride (24) est soudée à la partie extérieure (26) de la partie supérieure ou de la partie inférieure.

3. Réservoir de carburant (10) selon l'une ou l'autre des revendications 1 et 2, **caractérisé en ce que** la largeur de la première cavité (28) est égale aux largeurs de la bride (24).

4. Réservoir de carburant (10) selon l'une quelconque des revendications 1 à 3, **caractérisé en ce que** la première cavité (28) a une forme évasée, dans lequel la largeur de la première cavité (28) va en diminuant dans un sens allant de la paroi extérieure de première cavité à la seconde cavité (30).

5. Réservoir de carburant (10) selon l'une quelconque des revendications 1 à 4, **caractérisé en ce que** l'élément de support (18) a une forme symétrique en rotation.

6. Réservoir de carburant (10) selon l'une quelconque des revendications 1 à 5, **caractérisé en ce que** l'élément de support (18) a une forme évasée, dans lequel la largeur de l'élément de support (18) va en diminuant de ses extrémités axiales à son centre.

7. Réservoir de carburant (10) selon l'une quelconque des revendications 1 à 6, **caractérisé en ce que** l'élément de support (18) comprend au moins un point de rupture configuré pour rompre lorsqu'une force axiale dépassant un seuil de force prédéterminé est appliquée à l'élément de support (18).

8. Réservoir de carburant (10) selon l'une quelconque des revendications 1 à 7, **caractérisé en ce que** la paroi latérale (16), la partie inférieure (14) et la partie supérieure (12) du réservoir de carburant sont formées d'une seule pièce.

9. Réservoir de carburant (10) selon l'une quelconque des revendications 1 à 8, **caractérisé en ce que** la paroi latérale (16), la partie inférieure (14) et la partie supérieure (12) sont fabriquées au moins partiellement en un matériau thermoplastique.

10. Réservoir de carburant (10) selon l'une quelconque des revendications 1 à 9, **caractérisé en ce que** la paroi latérale (16), la partie inférieure (14) et la partie supérieure (12) sont fabriquées au moins partiellement en un matériau quelconque des matériaux suivants parmi : du polyéthylène, PE, du polyéthylène à haute densité, HDPE, du polypropylène, PP, du polyéthylène téréphtalate, PET, du polystyrène, PS, du méthacrylate de polyméthyle, PMMA, du polyoxyméthylène, POM, du poly(phénylène sulfure), PPS, du polyphtalamide, PPA, de la poly(étheréthercétone), PEEK, des polyamide-imides, PAI, ou du polyaryléthercétone, PAEK.

11. Réservoir de carburant (10) selon l'une quelconque des revendications 1 à 10, **caractérisé en ce que** le réservoir de carburant (10) est conçu en tant que réservoir unique ou en tant que réservoir monté en selle.

12. Véhicule motorisé comprenant un réservoir de carburant (10) selon l'une quelconque des revendications 1 à 11.

13. Procédé de fabrication d'un réservoir de carburant (10) selon l'une quelconque des revendications 1 à 11 au moyen d'un processus de moulage par soufflage, dans lequel le procédé comprend les étapes suivantes consistant à :
- utiliser une paraison en matière plastique à l'intérieur d'une cavité intérieure d'un moule, dans lequel la paraison définit une cavité intérieure, le moule comprend deux moitiés et est conçu pour former la forme souhaitée du réservoir de carburant, le moule comprend une première ouverture et une seconde ouverture, la première ouverture étant disposée au niveau d'un premier côté du moule et la seconde ouverture étant disposée au niveau d'un second côté du moule, le second côté étant opposé au premier côté, la première ouverture étant prévue pour introduire la paraison dans le moule, et la seconde ouverture étant prévue pour introduire un élément de support dans un espace intérieur de la paraison ;
- disposer un élément de support dans la cavité intérieure de la paraison ;
- souffler de l'air comprimé dans la paraison, déployant ainsi la paraison ;
- approcher l'une de l'autre les deux moitiés du moule, formant ainsi la paraison déployée conformément à la forme du moule ;
- refroidir la cavité intérieure du moule, solidifiant ainsi le réservoir de carburant formé,
**caractérisé en ce que** la hauteur de la première cavité (28) est inférieure à la hauteur de la bride (24).
